# EUROPÄISCHE PATENTSCHRIFT

(11) **EP 3 350 073 B1**
(45) Veröffentlichungstag und Bekanntmachung des Hinweises auf die Patenterteilung: **04.12.2019**
(21) Anmeldenummer: 16784388.7
(22) Anmeldetag: 14.09.2016
(51) Int. Cl.: F41G 7/22

(54) **MEERESBODEN-SENSOREINRICHTUNG**
SEABED SENSOR DEVICE
SYSTÈME DE DÉTECTION DE FOND MARIN

(30) Priorität: 18.09.2015 DE 202015006625 U
(43) Veröffentlichungstag der Anmeldung: 25.07.2018
(73) Patentinhaber: ATLAS ELEKTRONIK GmbH, 28309 Bremen (DE)
(72) Erfinder: NISSEN, Ivor, 24782 Rickert (DE); BENSEL, Andreas, 27283 Verden (DE); KALWA, Jörg, 28844 Weyhe (DE)
(74) Vertreter: thyssenkrupp Intellectual Property GmbH
(86) Internationale Anmeldenummer: PCT/DE2016/100428
(87) Internationale Veröffentlichungsnummer: WO 2017/045671

(56) Entgegenhaltungen:
- EP-A2- 2 471 707
- WO-A1-2009/147176
- DE-B3-102007 053 103
- US-A- 4 314 363
- US-A- 5 709 497

## Beschreibung

Die Neuerung betrifft eine Sensoreinrichtung zum Abgelegtwerden auf den Meeresboden und ein autonomes Unterwasserfahrzeug und eine Mutterplattform.

Eine kabellose Kommunikation unter Wasser stellt eine Herausforderung dar. Die Bandbreiten bei moderaten Reichweiten mittels Akustik sind sehr eingeschränkt. Das hat Auswirkungen auf die Datenrate und Robustheit. In einem Netzwerk kommen Daten, wie Sensordaten, von mehreren Kommunikationsknoten zusammen. Eine Fusion von Sensordaten ist daher Restriktionen unterworfen. Kabellose Übertragungsformen unter Wasser haben nicht das Potential, große Bandbreiten zur Verfügung zu stellen.

Im Bereich Torpedo kennt man einen Lichtwellenleiter als Form zum Steuern sowie als letzte Möglichkeit zum Eingreifen in den autonomen Fahrbetrieb.

Ein Lichtwellenleiter kann auch zum Betrieb von Tauchrobotern genutzt werden. Tauchroboter sind auch unter der Bezeichnung ROV (vom Englischen: remote operating vehicle) bekannt. Den Lichtwellenleiter spult man von einer Haspel ab, die auf einer Mutterplattform angeordnet ist. Derzeit können Lichtwellenleiter mehrere 10 Kilometer umfassen. Lichtwellenleiter lösen die Bandbreitenproblematik in Spezialfällen. Ein Ablegen eines ROV im Bereich eines Clusters von Boden-Sensor-Knoten für eine gewisse Zeit und ein Übertragen von Informationen über den Lichtwellenleiter birgt die Schwierigkeit, dass viele Unterwasserfahrzeuge beabsichtigt einen Auftrieb haben, damit im Falle eines Versagens das Fahrzeug aufschwimmt und nicht am Meeresboden verloren geht. Beim aktiven Liegen auf dem Meeresgrund oder beim Schweben in einer Wassersäule am Ort der Informationsaufnahme hält das Unterwasserfahrzeug mit Motorenkraft seine Position. Das kostet Energie und produziert Störgeräusche. Über die Störgeräusche ist das Unterwasserfahrzeug leicht zu entdecken.

In EP 2471707 A2 wird ein Kopplungskopf 8 beschrieben, der in einer Tiefe von 10 m bis 20 m unter der Wasseroberfläche gehalten wird. Ein Kabel 10 verbindet den Kopplungskopf 8 mit einem Basisschiff und versorgt den Kopplungskopf 8 mit elektrischer Energie. An den Kopplungskopf 8 kann ein autonomes Unterwasserfahrzeug 4 angekoppelt werden. Ein zweiteiliger Koppelmechanismus 6 besitzt einen ersten Teil, der am Kopplungskopf 8 angebracht ist, und einem zweiten Teil, der an einem Rendezvouskopf 18 des Unterwasserfahrzeugs 4 angebracht ist. Dieser Koppelmechanismus 46 besitzt einen Schnappverschluss mit mehreren beweglichen Schnappbügeln. Nachdem das Unterwasserfahrzeug 4 in eine Rendezvousposition 6 gebracht ist, kann es mithilfe des Rendezvouskopfes 18 an den Kopplungskopf 8 koppeln. Am Kopplungskopf 8 sind Hydrophonen 26 angebracht, am Rendezvouskopf 18 Hydrophonen 22. Dadurch ist eine Kommunikation zwischen dem Wasserfahrzeug und dem Kopplungskopf 8 über einen Kommunikationskanal 20 möglich.

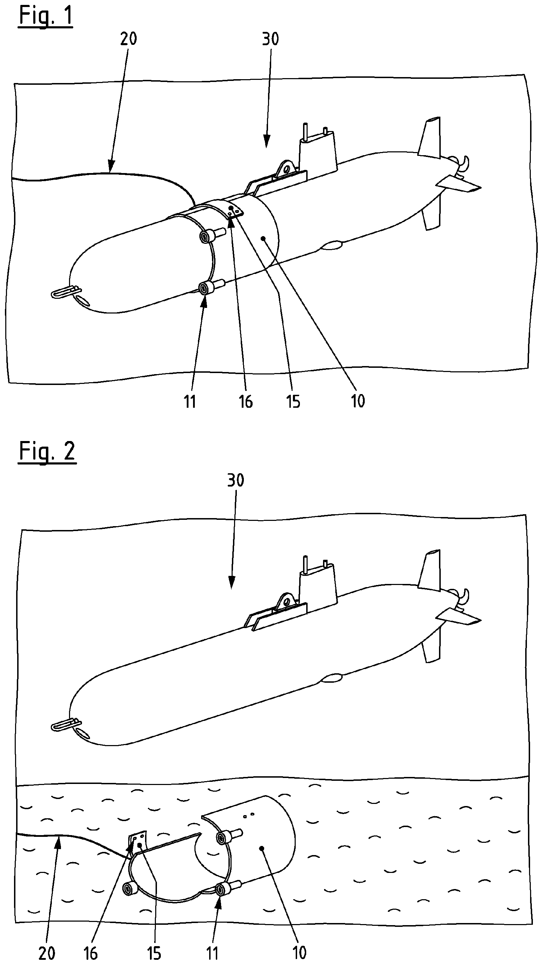

In US 5709497 wird ein Haltermechanismus für eine Schleppantenne (long streamer cable) mit vielen akustischen Sensoren, Z. B. Hydrophonen, beschrieben. Ein Schiff zieht diese Schleppantenne in einer vorbestimmten Tiefe durch das Wasser. Figur 2 und Figur 3 zeigen zwei Bestandteile 30 und 30', die gelenkig miteinander verbunden sind und sich durch Klauen (jaws) und Schlitze (slots 60 und 62) miteinander zu einem Ring verbinden lassen.

In US 2011/0192338 A1 wird ein System beschrieben, automatisch eine Unterwasser-Drohne ins Wasser zu lassen und wieder einzuholen. Figur 1 zeigt ein Handhabungs-System (handling cradle 10) mit einem Rahmen 11 umfassend eine Leiste (dorsal ridge), der an einem Kabel 18 angehängt ist. Eine Unterwasser Drohne kann mit Hilfe von gelenkig montierten Greifelementen (grasping means 14) gegriffen werden. Zwei Auftriebskörper (support means 12) bewirken, dass das System 10 im Wasser schwimmen kann (buoyancy). Figur 2 bis Figur 7 zeigen, wie ein Unterwasserfahrzeug 20 von dem System 10 gefasst und an Bord eines Schiffes gehoben wird. Figur 8 bis Figur 10 zeigen, welche Bilder eine Kamera an Bord des Systems 10 liefert. Ein Benutzer an Bord des aufnehmenden Schiffs kann diese Bilder verwenden, um das System 10 zu steuern.

Figur 1 von US 4314363 zeigt ein Schiff 10, welches ein Kabel (tow line 18) mit einer geschleppten Unterwasserantenne (seismic streamer cable 12) durchs Wasser 14 zieht. Die Unterwasserantenne 12 umfasst Hydrophonen 1 5,17 sowie Leiterbahnen (conductors 19, 21). Mehrere Boyen 24 halten die Unterwasserantenne 12 in einer gewünschten Tiefe mit Hilfe von Haltestricken (tether lines 26). An die Unterwasserantenne 12, die sich die 28 montiert sein. Das Kabel 18 lässt sich auf eine Winde (yoyo reel 30) aufwickeln.

In DE 2143116 C1 werden ein Verfahren und eine Vorrichtung beschrieben, um ein Seegebiet zu überwachen und um Schallquellen zu orten. Ein U-Boot 5 setzt eine Anzahl von Peilbojen 9 in dem zu überwachenden Meeresgebiet 1 aus, vgl. Figur 1. eine abgesetzte Peilboje 9 bleibt über ein Signalkabel 10 mit dem U-Boot 5 verbunden. In einer Ausführungsform umfasst eine Peilboje 9 einen Schwimmerteil 11 und einen Akustikteil 12, der am Schwimmerteil 11 angehängt ist. In einer alternativen Ausführungsform hat eine Peilboje 9 einen Verankerungsteil 16, der auf den Grund 15 abgesenkt ist, und ein Akustikteil 12 mit einem Auftriebskörper 17, der am Verankerungsteil 16 befestigt ist. Jede Peilboje 9 nimmt Peildaten von einer Schallquelle 2 auf und übermittelt diese über ein Signalkabel 10 an das U-Boot 5, welches sich in einer Schattenzone 6 auf.

DE 10 2007 053 103 wird als nächstliegender Stand der Technik gegenüber dem Gegenstand des Anspruchs 1 angesehen, und offenbart eine Sensoreinrichtung zum Abgelegtwerden auf dem Meeresboden und ein Unterwasserfahrzeug und eine Mutterplattform.

Die Aufgabe der Neuerung liegt primär darin, eine Sensoreinrichtung zum Ablegen auf dem Meeresboden zu schaffen, mit der Sensordaten aufgenommen werden können, ohne dass die Gefahr besteht, entdeckt werden zu können. Daneben soll die Sensoreinrichtung auch als Kommunikationsknoten in einem eigenen Unterwassernetzwerk eingesetzt werden können.

Die Aufgabe der Neuerung wird durch eine Sensoreinrichtung und ein autonomes Unterwasserfahrzeug und eine Mutterplattform mit den Merkmalen des Anspruchs 1 gelöst.

Die Vorteile resultieren daher, dass man die Sensoreinrichtung auf den Meeresboden absinken lässt. Die Sensoreinrichtung erzeugt keine leicht zu entdeckenden Störgeräusche, wie dies bei Unterwasserfahrzeugen der Fall ist, da Unterwasserfahrzeuge mit Motorenkraft ihre Lage unter Wasser beibehalten. Die Sensoreinrichtung umfasst zunächst eine Halterungsvorrichtung mit einer steuerbaren Entriegelung. Die vorgenannte Halterungsvorrichtung ist derart ausgebildet, dass mit der Halterungsvorrichtung die Sensoreinrichtung an ein autonomes Unterwasserfahrzeug befestigbar ist, damit die Sensoreinrichtung zu einem Einsatzgebiet transportierbar ist. Die vorgenannte Entriegelung ist derart ausgebildet, dass die Sensoreinrichtung im Einsatzgebiet von dem autonomen Unterwasserfahrzeug lösbar ist, damit die Sensoreinrichtung auf den Meeresboden absinkbar ist. Die Sensoreinrichtung ist als Absinkkörper ausgebildet, der eine wesentlich höhere Dichte als Wasser aufweist. Daher bleibt die Sensoreinrichtung auch bei stärkeren Strömungen an Ort und Stelle auf dem Meeresgrund. Die Sensoreinrichtung ist im Betrieb über einen Lichtwellenleiter mit einer Mutterplattform verbunden, um von der Mutterpattform gesteuert werden zu können. Die Sensoreinrichtung weist mindestens drei Hydrophone auf. Die Hydrophone können einerseits der gegnerischen Aufklärung oder der eigenen Kommunikation dienen. Mit einem zusätzlichen Tongeber kann die Sensoreinrichtung auch als eigener Kommunikationsknoten verwendet werden. Schließlich weist die Sensoreinrichtung Batterien zur Stromversorgung auf. Die Batterien sind so ausgelegt, dass ein Betrieb über mehrere Tage möglich ist. Nach einem Einsatz braucht die Sensoreinrichtung nicht geborgen zu werden, da die Sensoreinrichtung für den einmaligen Gebrauch konzipiert ist.

Gemäß einer Ausgestaltung der Neuerung ist die Sensoreinrichtung gurtartig ausgebildet und um den Rumpf des autonomen Unterwasserfahrzeuges schnallbar. Diese Ausbildung ist strömungsgünstig für das autonome Unterwasserfahrzeug.

Gemäß einer weiteren Ausgestaltung der Neuerung weist die Sensoreinrichtung freigebbare Auftriebskörper auf, mit denen während der Fahrt mit dem autonomen Unterwasserfahrzeug eine Auftriebsneutralität erhalten wird. Nach dem Lösen der Sensoreinrichtung von dem autonomen Unterwasserfahrzeug im Einsatzgebiet werden die Auftriebskörper freigegeben, damit die Sensoreinrichtung auf den Meeresboden absinken kann.

Gemäß einer weiteren Ausgestaltung weist die Sensoreinrichtung zusätzlich eine Kamera mit einer ein- und ausschaltbaren Lichtquelle auf. Dies erweitert den Einsatzbereich der Sensoreinrichtung.

Gemäß einer weiteren Ausgestaltung der Neuerung weist die Sensoreinrichtung keinen eigenen Prozessor auf. Dadurch werden die Batterien geschont, um lange im Betrieb bleiben zu können.

Gemäß einer weiteren Ausgestaltung weist die Sensoreinrichtung keinen eigenen Unterwasserantrieb auf. Denn die Sensoreinrichtung wird von einem autonomen Unterwasserfahrzeug zu einem Einsatzgebiet transportiert. Nach einem Einsatz ist auch kein eigener Unterwasserantrieb notwendig, da die Sensoreinrichtung an Ort und Stelle verbleibt, da die Sensoreinrichtung für den Einmalgebrauch bestimmt ist.

Im Weiteren wird die Erfindung anhand von Ausführungsbeispielen erläutert. Es zeigen
Fig. 1 ein autonomes Unterwasserfahrzeug mit einer angeschnallten Sensoreinrichtung;
Fig. 2 die zuvor in Fig. 1 angeschnallte Sensoreinrichtung, die auf den Meeresboden abgesetzt wurde.

Die Fig. 1 zeigt ein autonomes Unterwasserfahrzeug 30 mit einer gurtartig ausgebildeten Sensoreinrichtung 10, die um den Rumpf des autonomen Unterwasserfahrzeuges 30 geschallt ist.

Die Sensoreinrichtung 10 weist eine Halterungsvorrichtung 15 mit einer steuerbaren Entriegelung 16 auf. Mit der vorgenannten Halterungsvorrichtung 15 ist die Sensoreinrichtung 10 an dem autonomen Unterwasserfahrzeug 30 befestigt, damit die Sensoreinrichtung zu einem Einsatzgebiet transportiert werden kann. Die vorgenannte Entriegelung 16 ist derart ausgebildet, dass die Sensoreinrichtung 10 im Einsatzgebiet von dem autonomen Unterwasserfahrzeug 30 gelöst werden kann, um auf den Meeresboden absinken zu können.

Die Sensoreinrichtung 10 weist freigebbare Auftriebskörper (nicht dargestellt) auf, mit denen während der Fahrt mit dem autonomen Unterwasserfahrzeug 30 eine Auftriebsneutralität erhalten wird. Gleichzeitig mit dem Lösen der Sensoreinrichtung 10 erfolgt auch die Freigabe der vorgenannten Auftriebskörper.

Die Fig. 2 illustriert die auf den Meeresboden abgesunkene Sensoreinrichtung 10. Die Sensoreinrichtung 10 ist im Betrieb über einen Lichtwellenleiter 20 mit einer Mutterplattform verbunden. Die Mutterplattform ist ein Marineschiff. Auf der Mutterplattform befindet sich ist ein handelsüblicher PC zur Verarbeitung der Datenströme und Ansteuerung der Sensoreinrichtung 10. Der PC ist über eine Lichtwellenkarte mit dem Lichtwellenleiter 20 verbunden ist.

Die Sensoreinrichtung 10 weist mindestens drei Hydrophone 11 auf, um fremde oder eigene Schallsignale aufzunehmen. Zusätzlich weist die Sensoreinrichtung 10 einen Tongeber (nicht dargestellt) auf, um bei Bedarf einen eigenen Kommunikationsknoten aufbauen zu können. Zur Stromversorgung weist die Sensoreinrichtung 10 Batterien (nicht dargestellt) auf. Um die Batterielebensdauer zu verlängern, weist die Sensoreinrichtung 10 keinen eigenen Prozessor auf.

Zusätzlich weist die Sensoreinrichtung 10 eine Kamera (nicht dargestellt) und eine ein- und ausschaltbare Lichtquelle (nicht dargestellt) auf.
Die Sensoreinrichtung 10 ist für den Eimalgebrauch konzipiert und weist keinen eigenen Unterwasserantrieb auf.

Nachfolgend werden die Handhabungsschritte und Ablaufschritte im Zusammenhang mit der Sensoreinrichtung beschrieben:

Auf dem Marineschiff, der Mutterplattform, wird die gurtartig ausgebildete Sensoreinrichtung 10 um den Rumpf des autonomen Unterwasserfahrzeuges 30 geschallt.

Anschließend wird das autonome Unterwasserfahrzeug 30 mit der Sensoreinrichtung 10 zu Wasser gelassen.

Mit dem autonomen Unterwasserfahrzeug 30 wird die Sensoreinrichtung 10 zum Einsatzgebiet transportiert. Hierbei spult sich der Lichtwellenleiter 20 von einer Haspel ab, die auf dem Marineschiff angeordnet ist.

Auf dem Marineschiff, der Mutterplattform, ist der PC über den Lichtwellenleiter mit der Sensoreinrichtung 10 verbunden. Beim Erreichen des Einsatzgebietes gibt ein Operator an dem PC der steuerbaren Entriegelung 16 ein Signal zum Lösen der Sensoreinrichtung 10 von dem autonomen Unterwasserfahrzeug 30. Gleichzeitig mit dem Lösen der Sensoreinrichtung 10 von dem autonomen Unterwasserfahrzeug 30 werden auch die Auftriebskörper freigeben, die für die Auftriebsneutralität gesorgt haben. Die Sensoreinrichtung 10 sinkt auf den Meeresboden ab. Die Verbindung zur Mutterplattform bleibt über den Lichtwellenleiter 20 jedoch bestehen. Das autonome Unterwasserfahrzeug 30 kann sich nun entfernen. Es diente nur als Träger.

Die gurtartige Sensoreinrichtung 10 liegt, wie dargestellt, mit ihrer Rückseite auf dem Meeresboden. Die drei Hydrophone 11 sind entlang der Sensoreinrichtung 10 mit großem Abstand zueinander angeordnet, um eine räumliche Aufklärung oder Peilung zu ermöglichen. Die Hydrophon- und Kameradaten werden über den Lichtwellenleiter zum PC auf der Mutterplattform geleitet und im PC verarbeitet und auf einem Monitor angezeigt. Am PC kann die Lampe ein- und ausgeschaltet werden, um gute Kameraaufnehmen im Nächstbereich zu ermöglichen. Mit dem Tongeber können bei Bedarf Kommunikationssequenzen abgestrahlt werden.

Angaben zu den Komponenten der Sensoreinrichtung:
- Verwendet wird ein Hydrophon mit einem Frequenzbereich von 2-30 kHz. Jedes Hydrophon ist an einen eigenen Vorverstärker angeschlossen. Ein sich anschließender A/D-Wandler leitet die Hydrophon-Signale direkt auf den Lichtwellenleiter. Der A/D-Wandler weist eine Abtastrate von mindestens 100 Kilo-Samples per Second auf. Die Aktivierung erfolgt bereits beim Umschnallen auf den Rumpf des autonomen Unterwasserfahrzeuges.
- Als Tongeber ist ein Wandler eingesetzt.

In Abweichung zum dargestellten Ausführungsbeispiel kann das autonome Unterwasserfahrzeug 30 auch zwei Sensoreinrichtungen haltern und zu Einsatzgebieten transportieren. Die zweite Sensoreinrichtung ist über einen kurzen Lichtwellenleiter an der ersten Sensoreinrichtung verbunden. In der Transportstellung ist der kurze Lichtwellenleiter ein Knäuel, der aufgezogen wird. Wie beim dargestellten Ausführungsbeispiel, ist die erste Sensorplattform an der Mutterplattform mit einem Lichtwellenleiter verbunden.

### Bezugszeichenliste

- 10: Sensoreinrichtung
- 11: Hydrophon
- 15: Halterungsvorrichtung
- 16: Entriegelung
- 20: Lichtwellenleiter
- 30: autonomes Unterwasserfahrzeug

## Patentansprüche

1. Sensoreinrichtung (10) zum Abgelegtwerden auf den Meeresboden und autonomes Unterwasserfahrzeug (30) und Mutterplattform mit folgenden Merkmalen:
a) die Sensoreinrichtung (10) umfasst eine Halterungsvorrichtung (15) mit einer steuerbaren Entriegelung (16),
b) die Halterungsvorrichtung (15) ist derart ausgebildet, dass mit der Halterungsvorrichtung (15) die Sensoreinrichtung (10) an das autonome Unterwasserfahrzeug (30) befestigbar ist, damit die Sensoreinrichtung (10) zu einem Einsatzgebiet transportierbar ist,
c) die steuerbare Entriegelung (16) ist derart ausgebildet, dass die Sensoreinrichtung (10) im Einsatzgebiet von dem autonomen Unterwasserfahrzeug (30) lösbar ist, damit die Sensoreinrichtung (10) auf den Meeresboden absinkbar ist,
d) die Sensoreinrichtung (10) ist im Betrieb über einen Lichtwellenleiter (20) mit der Mutterplattform verbunden,
e) die Sensoreinrichtung (10) weist mindestens drei Hydrophone (11) auf,
f) die Sensoreinrichtung (10) weist einen Tongeber auf,
g) die Sensoreinrichtung (10) weist Batterien zur Stromversorgung auf.

2. Sensoreinrichtung (10) nach Anspruch 1, die gurtartig ausgebildet und um den Rumpf des autonomen Unterwasserfahrzeuges (30) schnallbar ist.

3. Sensoreinrichtung (10) nach Anspruch 1 oder 2, bei der die Sensoreinrichtung (10) freigebbare Auftriebskörper aufweist, mit denen während der Fahrt mit dem autonomen Unterwasserfahrzeug (30) eine Auftriebsneutralität erhalten wird.

4. Sensoreinrichtung (10) nach einem der Ansprüche 1 bis 3, bei der die Sensoreinrichtung (10) zusätzlich eine Kamera aufweist.

5. Sensoreinrichtung (10) nach einem der Ansprüche 1 bis 4, bei der die Sensoreinrichtung (10) keinen eigenen Prozessor aufweist.

6. Sensoreinrichtung (10) nach einem der Ansprüche 1 bis 5, bei der die Sensoreinrichtung (10) keinen eigenen Unterwasserantrieb aufweist.

## Claims

1. Sensor device (10) for being set down on the seabed and autonomous underwater vehicle (30) and mother platform, comprising the following features:
a) the sensor device (10) comprises a holder apparatus (15) with a controllable unlocking arrangement (16),
b) the holder apparatus (15) is designed in such a way that the sensor device (10) can be fastened to the autonomous underwater vehicle (30) by way of the holder apparatus (15), so that the sensor device (10) can be transported to an area of use,
c) the controllable unlocking arrangement (16) is designed in such a way that the sensor device (10) can be detached from the autonomous underwater vehicle (30) in the area of use, so that the sensor device (10) can be lowered to the seabed,
d) the sensor device (10) is connected to the mother platform by means of an optical waveguide (20) during operation,
e) the sensor device (10) comprises at least three hydrophones (11),
f) the sensor device (10) comprises a sound generator,
g) the sensor device (10) comprises batteries for power supply.

2. Sensor device (10) according to Claim 1, which is of belt-like design and can be clamped around the hull of the autonomous underwater vehicle (30).

3. Sensor device (10) according to Claim 1 or 2, in which the sensor device (10) comprises releasable buoyancy bodies by way of which neutral buoyancy is obtained during travel with the autonomous underwater vehicle (30).

4. Sensor device (10) according to one of Claims 1 to 3, in which the sensor device (10) additionally comprises a camera.

5. Sensor device (10) according to one of Claims 1 to 4, in which the sensor device (10) does not comprise its own processor.

6. Sensor device (10) according to one of Claims 1 to 5, in which the sensor device (10) does not comprise its own underwater drive.

## Revendications

1. Système de détection (10) destiné à être posé sur le fond marin et véhicule sous-marin autonome (30) et plate-forme mère présentant les caractéristiques suivantes :
a) le système de détection (10) comprend un dispositif de retenue (15) muni d'un dispositif de déverrouillage commandable (16),
b) le dispositif de retenue (15) est réalisé de manière à ce que le système de détection (10) puisse être fixé au véhicule sous-marin autonome (30) au moyen du dispositif de retenue (15), afin que le système de détection (10) puisse être transporté vers une zone d'opération,
c) le dispositif de déverrouillage commandable (16) est réalisé de manière à ce que le système de détection (10) puisse être détaché du véhicule sous-marin autonome (30) dans la zone d'opération, afin que le système de détection (10) puisse être descendu sur le fond marin,
d) le système de détection (10) est relié lors du fonctionnement à la plate-forme mère par un guide d'ondes optique (20),
e) le système de détection (10) comporte au moins trois hydrophones (11),
f) le système de détection (10) comporte un générateur de sons,
g) le système de détection (10) comporte des batteries permettant l'alimentation en courant.

2. Système de détection (10) selon la revendication 1, qui est réalisé en forme de courroie et peut être sanglé autour de la coque du véhicule sous-marin autonome (30) .

3. Système de détection (10) selon la revendication 1 ou 2, dans lequel le système de détection (10) comporte des corps flottants largables qui confèrent une neutralité en matière de flottabilité pendant le déplacement avec le véhicule sous-marin autonome (30).

4. Système de détection (10) selon l'une des revendications 1 à 3, dans lequel le système de détection (10) comporte en outre une caméra.

5. Système de détection (10) selon l'une des revendications 1 à 4, dans lequel le système de détection (10) ne comporte pas son propre processeur.

6. Système de détection (10) selon l'une des revendications 1 à 5, dans lequel le système de détection (10) ne comporte pas son propre dispositif de propulsion sous-marin.
